(19)

**Europäisches Patentamt**

**European Patent Office**

**Office européen des brevets**

(11) **EP 4 506 887 A1**

(12) **EUROPÄISCHE PATENTANMELDUNG**

(43) Veröffentlichungstag:
**12.02.2025 Patentblatt 2025/07**

(21) Anmeldenummer: **24190106.5**

(22) Anmeldetag: **22.07.2024**

(51) Internationale Patentklassifikation (IPC):
**G06T 7/00** *(2017.01)*

(52) Gemeinsame Patentklassifikation (CPC):
**G06T 7/0004;** G06T 2207/20081;
G06T 2207/20084; G06T 2207/30108

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **09.08.2023 DE 102023121302**

(71) Anmelder: **Hedderich, Juliane**
**55122 Mainz (DE)**

(72) Erfinder: **Hedderich, Juliane**
**55122 Mainz (DE)**

(74) Vertreter: **Prinz & Partner mbB**
**Patent- und Rechtsanwälte**
**Rundfunkplatz 2**
**80335 München (DE)**

(54) **VERFAHREN ZUM TRAINIEREN EINES COMPUTERGESTÜTZTEN SYSTEMS, VERFAHREN ZUM ANALYSIEREN VON FÜLLMATERIAL SOWIE COMPUTERGESTÜTZTES SYSTEM**

(57)    Es ist ein Verfahren zum Trainieren eines computergestützten Systems (10) zum Analysieren von Füllmaterial (12) gezeigt, das die folgenden Schritten umfasst:
- Bereitstellen wenigstens einer Probe, die eine Daune (14) und/oder eine Feder (16) von Land- oder Wassergeflügel umfasst, und Erfassen der Probe mittels eines bildgebenden Geräts, um Bilddaten der Probe zu erhalten, und/oder Bereitstellen von Bilddaten wenigstens einer Probe, die eine Daune (14) und/oder eine Feder (16) von Land- oder Wassergeflügel umfasst;
- Analysieren der Bilddaten mittels einer computergestützten Bilderkennung des computergestützten Systems (10), wobei die Probe automatisch klassifiziert wird und ein Klassifizierungsergebnis für die Probe ausgegeben wird;
- Überprüfen, ob das Klassifizierungsergebnis der analysierten Bilddaten mit der wenigstens einen bereitgestellten Probe übereinstimmt; und
- Anpassen der computergestützten Bilderkennung, sofern das Klassifizierungsergebnis von der bereitgestellten Probe abweicht.

Des Weiteren sind ein Verfahren zum Analysieren von Füllmaterial (12) mittels eines computergestützten Systems (10) sowie ein computergestütztes System (10) beschrieben.

**Fig. 6**

Bereitstellen Probe — S10

Ermitteln Bilddaten — S11

Analysieren & Klassifizieren Probe — S12

Überprüfen Klassifizierungsergebnis — S13

Anpassen Bilderkennung — S14

## Beschreibung

Die Erfindung betrifft ein Verfahren zum Trainieren eines computergestützten Systems zum Analysieren von Füllmaterial, insbesondere von Füllmaterial für Outdoor-Equipment, Kissen und Decken, bspw. Bettwaren. Des Weiteren betrifft die Erfindung ein Verfahren zum Analysieren von Füllmaterial mittels eines computergestützten Systems sowie ein computergestütztes System zum Analysieren von Füllmaterial.

Daunen sind eines der beliebtesten Füllmaterialien bei Kissen und Decken. Daunen stammen aus dem Untergefieder des Wassergeflügels, nämlich Gans und Ente, und halten die Wärme an deren Körper. Im Gegensatz zu Federn besitzen Daunen keinen (zentralen) Kiel, sondern Nebenäste, die auch mit dem Begriff "Filamente" bezeichnet werden. Diese Nebenäste werden durch einen Daunenkern der Daune zusammengehalten und sind weicher als die Fahne einer Feder.

Daunen und Federn besitzen eine erstaunliche Funktionsvielfalt. Sie sind in der Lage, z.B. Wärme über die von den Daunen und Federn eingeschlossene Luft zu isolieren und Feuchtigkeit aufzunehmen. Gleichzeitig sind sie atmungsaktiv, wodurch der Körper vor auskühlender und störender Nässe geschützt wird. Daher sind sie als Füllmaterial für Bettwaren, bspw. Decken und Kissen, und Outdoor-Equipment geeignet und werden dafür auch verwendet. Das Wärmeisolationsvermögen der Federn wird durch die der Daunen noch übertroffen. Durch die feine Verästelung der Daunen wird ein vergleichsweise großes Luftvolumen eingeschlossen, welches hervorragende Isolationseigenschaften besitzt, sodass Daunen zum Schutz des Körpers besonders gut geeignet und nachgefragt sind. Zudem sind Daunen leichter als Federn, sodass durch die Verwendung von Daunen das Gewicht drastisch reduziert werden können. Je hochwertiger eine Daune ist, umso weniger Daunen werden benötigt, um dieselbe Wärmeisolation zu erzielen.

In Europa gilt seit 2001 die EU-Norm EN 12934, welche eine technische Norm ist, die Hersteller und Zulieferer dazu anregt, Konsumenten über die Zusammensetzung der Füllung zu informieren und damit zu werben, die in Produkten verwendet wird, bspw. in Bettwaren. Gemäß dieser Norm müssen beispielsweise auf Etiketten von Bettdecken und Kissen das prozentuale Verhältnis von Daunen zu Federn aufgelistet sein. Eine freiwillige, aber weit verbreitete Angabe ist die Qualitätsklasse, z. B. "Klasse 1". Die Qualitätsklassenaufteilung beruht auf dem Anteil von anderen Elemente in der Füllung. Je mehr Anteile von z.B. gebrochenen Federn, abgerissenen Filamenten der Federn (Federnflug), abgerissenen Filamenten der Daune (Daunenflug), Landgeflügelfedern, Rückständen wie Kielmark und/oder Abfall enthalten sind, desto "minderwertiger" wird eine Füllung angesehen. Außerdem führen Fremdbestandteile, z.B. Anteile andere natürliche Fasern als Federn und Dauen und jede Art von Chemiefasern oder nicht-faserigen synthetischem Material, in der Füllung dazu, dass die Füllung nach gängigen Kennzeichnungsvorschriften nicht mehr als Füllung bestehend aus Daunen und Federn vermarket werden darf. Eine weitere freiwillige, aber weit verbreite Angabe auf dem Etikett ist die Angabe der Geflügelart der Füllung.

Um die Qualität der verwendeten Daunen zu gewährleisten und die Angaben von Herstellern sowie Zulieferern zu überprüfen, werden durch den Verband der Deutschen Federnindustrie (VDFI) stichprobenartig verschiedene Bettwaren im Markt aufgekauft und dahingehend überprüft, ob die Angaben zur Zusammensetzung des Füllmaterials korrekt sind, also z.B. der Gehalt an Daunen, Federn, anderen Elementen und der eventuell angegebenen Geflügelart. Die Überprüfung erfolgt gemäß der europäischen Prüfverfahrensnorm EN 12131. Derzeit handelt es sich dabei um ein zeitintensives Verfahren, das üblicherweise 4 bis 6 Stunden in Anspruch nimmt und nur von speziell trainierten und qualifizierten Personen durchgeführt werden kann. Bei diesem Verfahren wird eine Probe des Füllmaterials entnommen und die einzelnen Bestandteile der Probe werden mit einer Pinzette voneinander getrennt und z.B. auch unter einem Mikroskop einzeln angesehen und bewertet, um eine korrekte Überprüfung zu gewährleisten. Da die Anzahl der qualifizierten Personen stetig sinkt und aufgrund der zeitintensiven Analyse sind die hiermit verbundenen Kosten sehr hoch.

Dementsprechend ist es eine Aufgabe der Erfindung, die Analyse des Füllmaterials, d.h. die Erkennung der Bestandteile und deren Zuordnung, in kostengünstigerer Weise zu ermöglichen, ohne Qualitätseinbußen bei der Beurteilung in Kauf zu nehmen.

Die Aufgabe wird erfindungsgemäß gelöst durch ein Verfahren zum Trainieren eines computergestützten Systems zum Analysieren von Füllmaterial, mit den folgenden Schritten:

- Bereitstellen wenigstens einer Probe, die eine Daune und/oder eine Feder von Land- oder Wassergeflügel umfasst, und Erfassen der Probe mittels eines bildgebenden Geräts, beispielsweise einer Kamera oder eines Mikroskops, um Bilddaten der Probe zu erhalten, und/oder Bereitstellen von Bilddaten wenigstens einer Probe, die eine Daune und/oder eine Feder von Land- oder Wassergeflügel umfasst;

- Analysieren der Bilddaten mittels einer computergestützten Bilderkennung des computergestützten Systems, wobei die Probe von der computergestützten Bilderkennung automatisch klassifiziert wird und ein Klassifizierungsergebnis für die Probe von der computergestützten Bilderkennung ausgegeben wird;

- Überprüfen mittels des computergestützten Systems, ob das Klassifizierungsergebnis der analysierten Bilddaten mit der wenigstens einen bereitgestellten Probe übereinstimmt; und

- Anpassen der computergestützten Bilderkennung, sofern das Klassifizierungsergebnis von der bereitgestellten Probe abweicht.

Das computergestützte System, insbesondere die computergestützte Bilderkennung des computergestützten Systems, wird also trainiert, anhand zumindest eines Bildes einer Probe bzw. anhand von Bilddaten der Probe diese zu klassifizieren bzw. zu kategorisieren, also die Art der Probe zu bestimmen. Dies bedeutet, dass das computergestützte System zunächst trainiert wird, um eine Daune oder eine Feder zu erkennen bzw. diese voneinander zu unterscheiden. Die Erfindung basiert also auf der Idee, ein computergestütztes System so zu trainieren, dass eine automatische Klassifizierung des Füllmaterials möglich ist, also eine automatische Erkennung, welche Bestandteile im Füllmaterial enthalten sind, da automatisch erkannt wird, ob die Bestandteile des Füllmaterials bspw. eine Feder oder eine Daune ist. Durch ein kontinuierliches Training des computergestützten Systems kann die Klassifizierung des Systems stetig verbessert werden, also die Erkennung von Daunen und/oder Federn. Dies kann ebenfalls im laufenden Betrieb erfolgen, also mittels eines trainierten computergestützten Systems. Durch die Automatisierung der Klassifizierung werden die Kosten gesenkt sowie die benötigte Zeit reduziert. Zudem lassen sich menschliche Fehlurteile ausschließen, sodass die Qualität bei der Beurteilung sogar verbessert werden kann, da ein menschliches Fehlurteil ausgeschlossen wird. Darüber hinaus kann die Anzahl der zu analysierenden Proben erhöht werden, was die Präzision der Qualitätsbeurteilung erhöht.

Bei der Analyse der Bilddaten werden insbesondere (vordefinierte) Merkmale der Probe herangezogen, um die Probe zu klassifizieren, also um zu erkennen, ob es sich um eine Daune und/oder Feder handelt. Diese Merkmale können die Form der Feder, insbesondere ihre Spitze, das Vorhandensein eines Kiels, das Vorhandensein von Nebenästen, Charakteristika der Nebenäste und/oder die Form des Kiels bzw. der Nebenäste betreffen.

Aufgrund dieser Merkmale ist es unter anderem möglich, zwischen Feder und Daune zu unterscheiden und/oder die Geflügelart zu bestimmen.

Die Bilddaten können so verarbeitet werden, dass Bereiche der erfassten Probe analysiert werden, in denen die Merkmale vorhanden sind. Insofern wird beispielsweise zunächst das von dem bildgebenden Gerät, beispielsweise der Kamera oder dem Mikroskop, aufgenommene Bild analysiert, um die wenigstens eine Feder und/oder Daune im aufgenommenen Bild zu erkennen, also von der Umgebung zu isolieren.

Daran anschließend kann die wenigstens eine Feder oder Daune detailliert analysiert werden, um Bereiche der Feder bzw. der Daune zu identifizieren, bspw.

die Spitze der Feder, einen Kiel und/oder Nebenäste zu identifizieren. Nachdem die einzelnen Bereiche der Probe, also der wenigstens einen Feder oder Daune, erkannt worden sind, bspw. unter anderem die Spitze der Feder, ein Kiel und/oder Nebenäste, werden diese Bereiche analysiert, um klassifiziert werden zu können. Hierzu kann beispielsweise auf in einer Bibliothek hinterlegte Daten zurückgegriffen werden, um diese Daten mit den Bilddaten abzugleichen.

Anschließend können die Klassifizierungsergebnisse der einzelnen Bereiche der Feder oder Daune zusammengeführt werden, um ein Klassifizierungsergebnis für die Feder oder Daune zu erhalten. Beispielsweise kann die Form der Spitze der Feder, das Vorhandensein eines Kiels, das Vorhandensein einer Fahne, insbesondere bestehend aus Federnästen, und/oder das Vorhandensein von Nebenästen mit relativ weit voneinander entfernten Knoten dazu führen, dass das Klassifizierungsergebnis "Gänsefeder" ist, also die Probe eine Feder anstatt einer Daune ist und die Geflügelart als Gans identifiziert wurde. Sollte die Form der Spitze dagegen anders sein, bspw. spitzer, und/oder die Analyse der Knotenabstände auf den Ästen und Nebenästen der Fahne ergeben, dass die Knoten eng beieinander liegen, so kann das Klassifizierungsergebnis "Entenfeder" sein, also die Probe eine Feder sein und die Geflügelart als Ente identifiziert werden. Sollte bei der Analyse festgestellt werden, dass eine Beifeder vorhanden ist und/oder die Analyse der einzelnen Nebenäste in Bezug auf das Vorhandensein der "Knoten" ergeben, dass die Nebenäste keine Knoten aufweisen, so kann das Klassifizierungsergebnis "Hühnerfeder" sein, also die Probe eine Feder sein und die Geflügelart als Huhn identifiziert werden.

Sollte dagegen festgestellt werden, dass es sich bei der Probe um eine Daune handelt, bspw. da kein Kiel, keine Fahne und/oder keine Spitze vorhanden ist, so können einzelne Filamente der Probe (Daune) analysiert werden. Anhand von Knotenabstände auf einzelnen Filamenten kann die Geflügelart der Daune erkannt und zugeordnet werden. Bei eng beieinander liegen Knoten kann das Klassifizierungsergebnis "Entendaune" sein, bei weiter entfernt liegenden Knoten kann das Klassifizierungsergebnis "Gänsedaune" sein. Die Knotenabstände sind nur unter starker Vergrößerung sichtbar, weswegen eine Kamera mit hoher Auflösung oder ein Mikroskop notwendig ist.

Das von der Probe aufgenommene Bild kann also grundsätzlich segmentiert werden bzw. in ein Raster unterteilt werden, bspw. in einzelne Pixel zerlegt werden, um Bereiche der Probe zu isolieren und einzeln zu klassifizieren. Hierzu werden Merkmale aus dem Bild extrahiert, also den Bilddaten. Grundsätzlich kann also eine Segmentierung erfolgen, bei der ein Element eines Bildes bis zum nächsten Pixel lokalisiert wird.

Alternativ zur Segmentierung kann die wenigstens eine Feder oder Daune auch als Ganzes mittels der computergestützten Bilderkennung klassifiziert werden, also als Daune oder Feder erkannt werden. Es findet dann keine Segmentierung statt, da die Probe in ihrer Gesamtheit klassifiziert wird.

Grundsätzlich kann als bildgebendes Gerät eine Kamera oder ein Mikroskop zum Einsatz kommen. Unter einem bildgebenden Gerät kann also ein Gerät verstanden werden, das grundsätzlich ein Objekt erfasst und Bilddaten von dem erfassten Objekt erzeugt, die weiterverarbeitet werden können. Die Bilddaten können direkt von dem bildgebenden Gerät weiterverarbeitet werden, um ein Bild (Darstellung) des erfassten Objekts zu erzeugen. Alternativ werden die Bilddaten an ein weiteres Gerät weitergeleitet, um das Bild bzw. die Darstellung des erfassten Objekts zu erzeugen. Unter dem bildgebenden Gerät kann also ein optisches Gerät fallen, dass das Objekt optisch erfasst, beispielsweise eine Kamera.

Bei dem Mikroskop kann es sich beispielsweise um ein Elektronenmikroskop handeln. Ferner können weitere bildgebende Geräte verwendet werden, insbesondere medizinische Geräte zur Bildgebung oder industrielle Geräte zur Bildgebung, bspw. zur Riss- und/oder Bruchdetektion.

Vorzugsweise umfasst die Probe eine Mischung mehrerer unterschiedlicher Arten von Daunen und/oder Federn, wobei eine quantitative Zusammensetzung der Probe bestimmt wird, wobei die bestimmte quantitative Zusammensetzung dann als Ausgabewert ausgegeben werden kann. Es wird also nicht eine einzelne Feder oder eine einzelne Daune analysiert, sondern eine Mischung, die zumindest Daunen und/oder Federn umfasst, bspw. von unterschiedlichen Geflügelarten. Zudem kann die Mischung noch andere Elemente umfassen. Die computergestützte Bilderkennung wird also trainiert, die Anteile der jeweiligen Bestandteile der Mischung zu analysieren. Hierzu ist es zunächst notwendig, die einzelnen Bestandteile der Mischung zu klassifizieren, also als Daune, Feder usw. zu erkennen, wie vorstehend bereits erläutert wurde. In einem zweiten Schritt kann dann die quantitative Zusammensetzung ermittelt werden. Basierend auf der quantitativen Zusammensetzung ist es möglich, einen Rückschluss auf die Qualitätsklasse der Mischung zu ziehen, sodass die Angaben der Hersteller und/oder Zulieferer des Füllmaterials überprüft werden können.

Gemäß einer Variante wird ein Anteil von Füllmaterial in der Probe ausgegeben, der weder von einem Landgeflügel noch von einem Wassergeflügel stammt. Es kann also der Anteil von Fremdstoffen ("Fremdstoffanteil") in der Probe ermittelt werden. Als Fremdbestandteile sind Stoffe und Materialien anzusehen, die weder von einem Landgeflügel noch von einem Wassergeflügel stammen. Dabei handelt es sich insbesondere um einen Anteil von synthetischem Füllmaterial und/oder Baumwolle oder anderen Stoffen, bspw. Staub und/oder Dreck. Insofern kann der Anteil an Beimischungen erfasst werden.

Zudem lässt sich die Art des Fremdstoffs identifizieren, beispielsweise die Art des synthetischen Füllmaterials, also Polyester, Polyesterfaser, Polyurethan-Schaum und ähnliches.

Insbesondere da der Anteil von synthetischen Fremdstoffen, synthetischer Fremdstoffanteil, in der Probe ermittelt werden kann, ist es nicht mehr notwendig, die synthetischen Fremdstoffe mittels eines mechanischen Trennungsverfahrens, was sehr zeitaufwendig ist, oder eines chemischen Verfahrens (mittels Hypochlorid) zu isolieren, was jedoch hohe Umwelteinflüsse hat, da die verwendete chemische Lösung entsorgt werden muss. Alternativ sind enzymatische Verfahren bekannt, um die synthetischen Fremdstoffe zu isolieren, was jedoch sehr kostenintensiv ist.

Das erfindungsgemäße Verfahren bietet eine effiziente, umweltschonende und kostengünstige Möglichkeit, den Anteil von synthetischen Fremdstoffen, also den synthetischen Fremdstoffanteil, in der Probe zu ermitteln, insbesondere im Vergleich zu den aus dem Stand der Technik bekannten Verfahren zur Trennung der synthetischen Fremdstoffe.

Landgeflügel, beispielsweise Hühner, haben keine Daunen, sodass von Landgeflügel nur Federn als Füllmaterial verwendet werden können. Dabei ist es wichtig, dass Langfedern, d. h. Federn vom Schwanz und/oder Flügel, nicht bei qualitativ hochwertigen Bettwaren verwendet werden dürfen. Auch diese Langfedern können durch ein entsprechendes Training des computergestützten Systems klassifiziert werden. Hierzu wird beispielsweise die Form des Kiels und/oder die Fahne der Feder analysiert, insbesondere die Länge der Fahne bzw. der Abstand des Endes der Fahne, also der Spitze, bis zum Ende des Kiels.

Gemäß einer weiteren Variante, wird eine Zusammensetzung der Probe bestimmt und optional als Wert ausgegeben. Dabei hängt die Zusammensetzung von dem Anteil an Daunen, dem Anteil an Federn, dem Anteil an gebrochenen Federn, dem Anteil an Daunenflug, dem Anteil an Federnflug und/oder dem Anteil von Füllmaterial ab, welches weder von einem Landgeflügel noch von einem Wassergeflügel stammt. Die Qualitätsklasse hängt dabei von dem Anteil der "anderen Elemente" im Füllmaterial und eventuell der "Geflügelart" ab.

Vorzugsweise wird bei der Analyse der Bilddaten mittels einer computergestützten Bilderkennung auch eine klassifizierte Geflügelart als Teil des Klassifizierungsergebnisses ausgegeben. Bei der Geflügelart, die als Klassifizierungsergebnis ausgegeben wird, handelt es sich insbesondere um Gänse, Enten und Hühner. Auch die Geflügelart hat einen Einfluss auf die Qualitätsklasse. Insbesondere Gänsedaunen werden als sehr gut erachtet, während Füllmaterial mit Hühnerfedern eine schlechtere Qualitätsklasse zugewiesen wird.

Gemäß einer Variante erfolgt das Überprüfen des Klassifizierungsergebnisses automatisiert, indem der computergestützten Bilderkennung eine vordefinierte Reihenfolge an bekannten Proben vorgegeben wird. Somit erhält die computergestützte Bilderkennung beim Training bereits ein Auswerteergebnis für jede zu analysierende Probe und kann selbstständig das jeweilige Klassifizierungsergebnis mit dem zugeordneten Auswerteergebnis abgleichen. Sollte das von der computergestützten Bilderkennung ausgegebene Klassifizierungsergebnis beim Trainieren nicht dem Auswerteergebnis entsprechen, so passt sich die computergestützte Bilderkennung selbsttätig an. Dadurch kann bereits der Trainingsprozess bis zu einem gewissen Maß automatisiert werden, was das Trainieren des computergestützten Systems beschleunigt sowie die Kosten reduziert. Sofern dies für eine Reihe von Proben, insbesondere verschiedener Proben, durchgeführt worden ist, ist entsprechend sichergestellt, dass die computergestützte Bilderkennung trainiert ist.

Das Training erfolgt also anhand von Trainings-Datensätzen, die zu analysierende Bilddaten und das dazugehörige Auswerteergebnis umfassen. Basierend auf den zu analysierenden Bilddaten gibt die computergestützte Bilderkennung das Klassifizierungsergebnis aus, welches mit dem im Trainingsdatensatz enthaltenen Auswerteergebnis abgeglichen wird, um eine etwaige Abweichung festzustellen. Liegt eine nicht-tolerierbare Abweichung vor, so wird die computergestützte Bilderkennung angepasst bzw. passt sich die computergestützte Bilderkennung selbsttätig an.

Bevorzugt wird eine auf künstlicher Intelligenz basierende Bilderkennung verwendet, um die Bilddaten zu analysieren. Dies ist insbesondere deshalb vorteilhaft, da eine künstliche Intelligenz lernfähig ist, sodass eine stetige Verbesserung der Klassifizierung möglich ist. Die zuvor beschriebenen Schritte, nämlich Segmentierung, Erkennung und Klassifizierung, lassen sich mit einer auf künstlicher Intelligenz basierenden Bilderkennung durchführen.

Bei der künstlichen Intelligenz kann es sich beispielsweise um eine Methode des maschinellen Lernens, insbesondere um ein Convolutional Neural Network, handeln.

Während des Trainierens des computergestützten Systems können die Gewichtungsfaktoren der computergestützten Bilderkennung angepasst werden, sofern das Klassifizierungsergebnis von der bereitgestellten Probe abweicht. Die Gewichtung der einzelnen Verbindungen zwischen Schichten der künstlichen Intelligenz kann also während des Trainings verändert werden. Somit kann die Qualität der Klassifizierung stetig verbessert werden, sodass anschließend qualitativ hochwertigere und zuverlässigere Klassifizierungsergebnisse geliefert werden können. Mit anderen Worten wird die Erkennung verbessert.

Des Weiteren wird die Aufgabe erfindungsgemäß gelöst durch ein Verfahren zum Analysieren von Füllmaterial mittels eines computergestützten Systems. Dabei umfasst das Verfahren die folgenden Schritte:

- Bereitstellen wenigstens einer Probe, die eine Daune und/oder eine Feder von Land- oder Wassergeflügel umfasst;

- Erfassen der Probe mittels eines bildgebenden Geräts, beispielsweise einer Kamera oder eines Mikroskops, um Bilddaten der Probe zu erhalten;

- Analysieren der Bilddaten mittels einer computergestützten Bilderkennung des computergestützten Systems;

- Automatisches Klassifizieren der Probe mittels der computergestützten Bilderkennung; und

- Ausgeben eines Klassifizierungsergebnisses für die Probe mittels der computergestützten Bilderkennung.

Durch das Klassifizieren mittels des computergestützten Systems kann die benötigte Zeit drastisch reduziert werden, sodass das Verfahren anstatt der bisherigen 4 bis 6 Stunden nunmehr nur noch 4 bis 6 Minuten dauert. Des Weiteren werden die Kosten deutlich gesenkt.

Vorzugsweise nimmt das bildgebende Gerät, beispielsweise die Kamera oder das Mikroskop, mehrere Einzelbilder, insbesondere Graustufenbilder, auf, die die benötigten Bilddaten für die Analyse mittels des computergestützten Systems bereitstellen. Dazu werden die mittels des bildgebenden Geräts aufgenommen Einzelbilder von dem computergestützten System zu einem Gesamtbild zusammengefügt, was dem Bild der Probe entspricht.

Anschließend kann das erhaltene Gesamtbild, also das Bild der Probe, in Bildbereiche segmentiert werden, wie vorstehend schon erläutert, um die Probe zu klassifizieren. Das von der Probe aufgenommene Bild kann also segmentiert werden bzw. in ein Raster unterteilt werden, um Bereiche der Probe zu isolieren und einzeln zu klassifizieren.

Für das Klassifizieren der Probe können optional mit einem weiteren bildgebenden Gerät, beispielsweise einer weiteren Kamera oder einem weiteren Mikroskop, die insbesondere auch beweglich ist, Makroaufnahmen bestimmter Bereiche oder Elemente der Probe aufgenommen werden, um ein möglichst genaues Klassifizierungsergebnis ausgeben zu können. Dies ist vor allem von Bedeutung, wenn es darum geht, die Geflügelart zu bestimmen, insbesondere anhand von Merkmalen durch Analyse von Knoten bzw. Knotenabständen auf den Ästen und Nebenästen der Fahne, wie vorstehend bereits erläutert.

Gemäß einer Variante wird eine klassifizierte Geflügelart und/oder eine quantitative Zusammensetzung der Probe ausgegeben, insbesondere wobei ein Anteil von Füllmaterial in der Probe ausgegeben wird, der weder von einem Landgeflügel noch von einem Wassergeflügel stammt. Stattdessen besteht dieser Anteil beispielsweise aus einem synthetischen Füllmaterial und/oder Baumwolle oder anderen Stoffen, bspw. Staub und/oder Dreck. Sollte der Anteil an Fremdbestandteilen oder Fremdstoffen 0,5% oder mehr sein, so bedeutet dies in Europa, dass das Füllmaterial nicht mehr als Daunenfüllung oder Federfüllung ausgezeichnet werden darf. Wie bereits in Bezug auf das Trainingsverfahren erwähnt, kann von der quantitativen Zusammensetzung, insbesondere vom Anteil der Fremdbestandteile bzw. Fremdstoffe, und der identifizierten Geflügelart auf die Qualitätsklasse geschlossen werden, sodass eine unabhängige Einstufung der Qualitätsklasse ermöglicht wird. Da das computergestützte System trainiert worden ist, die quantitative Zusammensetzung der Probe als Klassifizierungsergebnis auszugeben, ist das trainierte computergestützte System auch hierzu in der Lage.

Dabei hängt die Zusammensetzung von dem Anteil an Daunen, dem Anteil an Federn, dem Anteil an gebrochenen Federn, dem Anteil an Daunenflug, dem Anteil an Federnflug und/oder dem Anteil an Füllmaterial ab, welches weder von einem Landgeflügel noch von einem Wassergeflügel stammt. Neben der Qualitätsklasse kann somit auch beurteilt werden, ob die Angabe auf dem Etikett und ggfs. der Preis des Produktes gerechtfertigt ist.

Bevorzugt ist das computergestützte System mit dem vorher beschriebenen Verfahren zum Trainieren eines computergestützten Systems zum Klassifizieren von Füllmaterial trainiert worden. Wie bereits vorhergehend erläutert, kann somit eine zuverlässige und richtige Klassifizierung gewährleistet werden.

Außerdem wird die Aufgabe erfindungsgemäß gelöst durch ein computergestütztes System zum Analysieren von Füllmaterial, wobei das computergestützte System ein bildgebendes Modul, beispielsweise ein Kameramodul oder ein Mikroskop-Modul, und ein Auswertemodul umfasst. Dabei ist das computergestützte System eingerichtet, das vorhergehend beschriebene Verfahren zum Analysieren von Füllmaterial auszuführen. Mit anderen Worten ermöglicht das computergestützte System eine zuverlässige, automatisierte und genaue Klassifizierung des Füllmaterials, sodass sowohl die benötigte Zeit als auch die entstehenden Kosten reduziert werden können.

Das Auswertemodul kann dabei einen Prozessor umfassen oder mit einem Prozessor verbunden sein, wobei die computergestützte Bilderkennung auf dem Prozessor hinterlegt ist. Zusätzlich kann das Auswertemodul auch eine auf dem Prozessor hinterlegte Gewichtserkennung umfassen, sodass das Klassifizierungsergebnis auch die quantitative Gewichtsverteilung der Probe umfasst.

Die computergestützte Bilderkennung ist auch in der Lage, die Maße der Probe zu erfassen, um so beispielsweise eine Größe bzw. ein Volumen der Probe zu ermitteln, insbesondere der Daune oder Feder. Nachdem die computergestützte Bilderkennung die Probe klassifizieren kann, kann anhand des Klassifizierungsergebnisses auf Dichtewerte zurückgegriffen werden, um so das Gewicht der Probe basierend auf der erfassten Größe bzw. des erfassten Volumens und dem Klassifizierungsergebnis zu ermitteln.

Alternativ kann vorgesehen sein, dass das Gewicht der Probe mittels einer Wiegeeinrichtung, beispielsweise einer Waage, bestimmt wird. Beispielsweise ist die Wiegeeinrichtung einer Probefläche zugeordnet, auf der die Probe platziert wird. Das Eigengewicht der Probefläche wird beim Wiegen der Probe berücksichtigt, sodass mittels der Wiegeeinrichtung das tatsächliche Gewicht der Probe bestimmt werden kann.

Das bildgebende Modul, das ein Kameramodul oder ein Mikroskop-Modul sein kann, lässt sich demnach auch als ein bildgebendes Modul bezeichnen, da das jeweilige bildgebende Gerät, also die Kamera bzw. das Mikroskop, ein bildgebendes Gerät ist, also Bilder bzw. Bilddaten erzeugt, welche weiter verarbeitet werden können.

Gemäß einer Ausführungsform umfasst das bildgebende Modul, beispielsweise das Kameramodul, zumindest eine hochauflösende Kamera. Dabei kann die Kamera entlang einer Schiene verfahrbar sein oder aber fest an einem Gehäuse des computergestützten Systems montiert sein. Selbstverständlich kann das Kameramodul auch mehrere Kameras umfassen, die Bilddaten aus unterschiedlichen Erfassungswinkeln bereitstellen. Dies ist insbesondere von Vorteil, um die Größe bzw. das Volumen der Probe zu ermitteln.

Das bildgebende Modul, beispielsweise das Kameramodul, kann zusätzlich eine weitere hochauflösende Kamera umfassen, die geeignet ist, Makroaufnahmen aufzunehmen, wie vorstehend bereits beschrieben wurde.

Diese Kamera kann ebenfalls an einem Schlitten montiert und entlang der Schienen verfahrbar sein. Alternativ können auch beide Kameras des Kameramoduls an einem gemeinsamen Schlitten angebracht sein.

Grundsätzlich kann das bildgebende Modul auch ein Mikroskop oder zwei Mikroskope umfassen. Insbesondere ist das wenigstens eine Mikroskop entlang einer Schiene verfahrbar, wie vorstehend in Bezug auf die Kameras schon erläutert wurde.

Es kann eine Verwirbelungs- oder Vermischungseinheit vorgesehen sein, die eingerichtet ist, das zu klassifizierende Füllmaterial aufzuwirbeln, insbesondere Bestandteile einer Mischung zu vermischen. Dadurch kann sichergestellt werden, dass schwerere Bestandteile nicht von den leichteren Bestandteilen komplett verdeckt werden und nicht mit in das Klassifizierungsergebnis einfließen. Hierdurch kann der Grad der Automatisierung weiter erhöht werden, da die zu untersuchende Probe bzw. Mischung nicht zuvor händisch ausgebreitet werden muss.

Dabei kann es vorgesehen sein, dass das zu klassifizierende Füllmaterial einmal aufgewirbelt bzw. vermischt wird, wobei währenddessen oder danach ein Bild über das bildgebende Modul, beispielsweise das Kameramodul, aufgenommen wird oder alternativ, dass das bildgebende Modul, beispielsweise das Kameramodul, während des Verwirbelns bzw. Vermischens eine Bilderserie des zu klassifizierenden Füllmaterials aufnimmt.

Grundsätzlich kann vorgesehen sein, dass jedem Pixel des Bilds der Probe, also des Gesamtbilds, von der Auswerteeinheit eine Gewichtung zugewiesen wird, die sich nach der Intensität bzw. Dunkelheit des Pixels richtet. Zusätzlich kann ein Gewichtungsfaktor basierend auf dem detektierten Element des Pixels vorgesehen sein. Eine Gesamtgewichtung ergibt sich dann durch Summierung der Gewichtungen und Gewichtungsfaktoren der Pixel, wobei Pixel von leeren Stellen unberücksichtigt bleiben. Das Ergebnis gibt Auskunft über die Qualität der Probe des Füllmaterials.

Es ist mit dem Verfahren sowie dem computergestützten System eine normgerechte Qualitätsbeurteilung möglich, insbesondere gemäß der Kennzeichnungsnorm EN 12934.

Weitere Merkmale und Vorteile der Erfindung ergeben sich aus der nachfolgenden Beschreibung sowie aus den Zeichnungen, auf die Bezug genommen wird. In den schematischen Zeichnungen zeigen:

- Figur 1 eine schematische Darstellung einer ersten Ausführungsform eines erfindungsgemäßen computergestützten Systems;

- Figur 2 eine schematische Darstellung einer zweiten Ausführungsform des erfindungsgemäßen computergestützten Systems;

- Figur 3 eine schematische Darstellung einer dritten Ausführungsform des erfindungsgemäßen computergestützten Systems;

- Figur 4 eine Übersicht eines erfindungsgemäßen Verfahrens zum Analysieren von Füllmaterial;

- Figur 5 eine Übersicht der Zwischenschritte des in Figur 3 gezeigten Verfahrens;

- Figur 6 eine Übersicht eines erfindungsgemäßen Verfahrens zum Trainieren eines erfindungsgemäßen computergestützten Systems;

- Figur 7 Darstellungen von Federn, wobei in Figur 7A eine Entenfeder, in Figur 7B eine Gänsefeder, in Figur 7C eine Hühnerfeder und in Figur 7D eine Langfeder dargestellt sind;

- Figur 8 Darstellungen von gebrochenen Federn, wobei in Figur 8A eine gebrochene Entenfeder und in Figur 8B eine gebrochene Gänsefeder dargestellt sind;

- Figur 9 Darstellungen von geknickten Federn, wobei in Figur 9A eine geknickte Entenfeder und in Figur 9B eine geknickte Gänsefeder dargestellt sind;

- Figur 10 Darstellungen von beschädigten Federn, wobei in Figur 10A eine beschädigte Entenfeder und in Figur 10B eine beschädigte Gänsefeder dargestellt sind;

- Figur 11 Darstellungen von Daunen, wobei in Figuren 11A und 11B verschiedene Formen von Daunen, in Figur 11C eine unreife Daune und in Figur 11D eine Flaumfeder dargestellt sind; und

- Figur 12 Darstellungen von verschiedenen Nebenästen, wobei der Nebenast in Figur 12A von einer Ente, in Figur 12B von einer Gans und in Figur 12C von einem Huhn stammt.

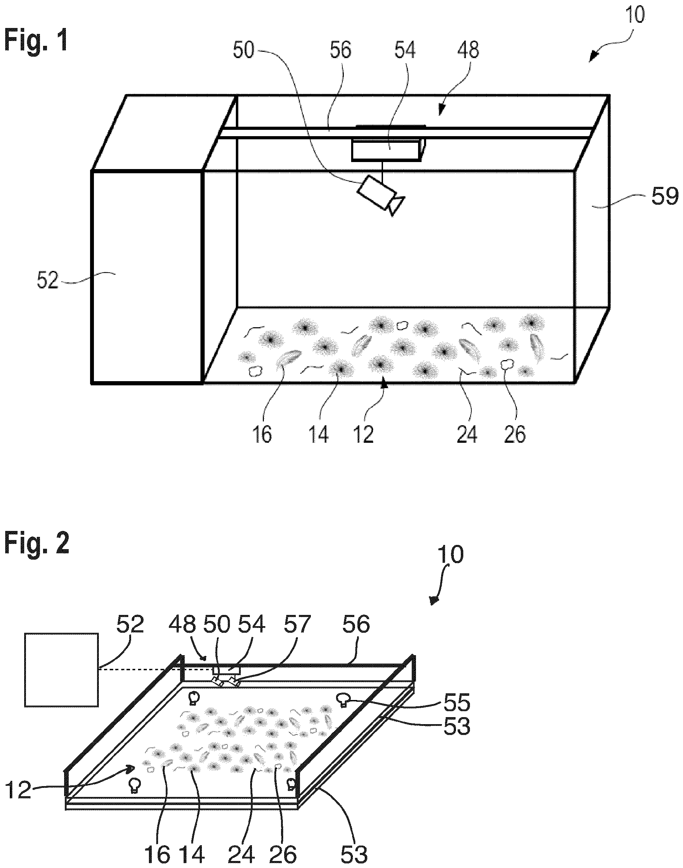

Figur 1 zeigt ein erfindungsgemäßes computergestütztes System 10 zum Analysieren von Füllmaterial 12, insbesondere von Füllmaterial für Outdoor-Equipment, Kissen und Decken, bspw. Bettwaren.

Bei dem dargestellten Füllmaterial 12 handelt es sich um eine Mischung aus Daunen 14 und Federn 16. Zudem umfasst das dargestellte Füllmaterial 12 sogenannte andere Elemente, wie gebrochene Federn, insbesondere gebrochene Gänsefedern 18 sowie gebrochene Entenfedern 20, Daunenflug 22, Federnflug und/oder Füllmaterial, welches weder von einem Landgeflügel noch von einem Wassergeflügel stammt, beispielsweise synthetisches Füllmaterial 24, Baumwolle 26 und/oder Staub bzw. Dreck. Zu den anderen Elementen können außerdem geknickte Federn und beschädigte Federn gehören, insbesondere geknickte Gänsefedern 28, geknickte Entenfeder 30, beschädigte Gänsefedern 32 und beschädigte Entenfedern 34. Insofern umfassen die anderen Elemente sowohl Füllmaterial, welches weder von einem Landgeflügel noch von einem Wassergeflügel stammt, als auch Füllmaterial, welches von einem Landgeflügel oder von einem Wassergeflügel stammt, aber bspw. gebrochen, geknickt und/oder beschädigt ist.

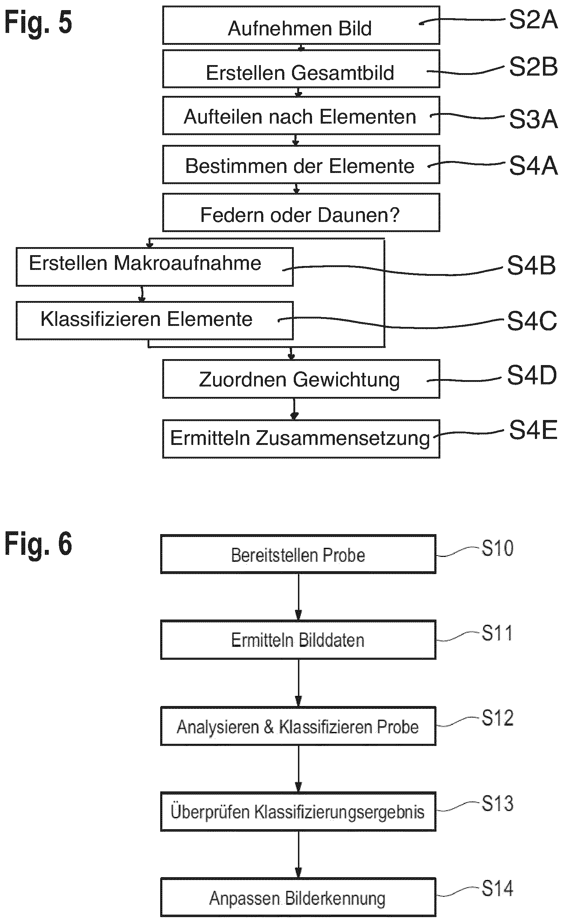

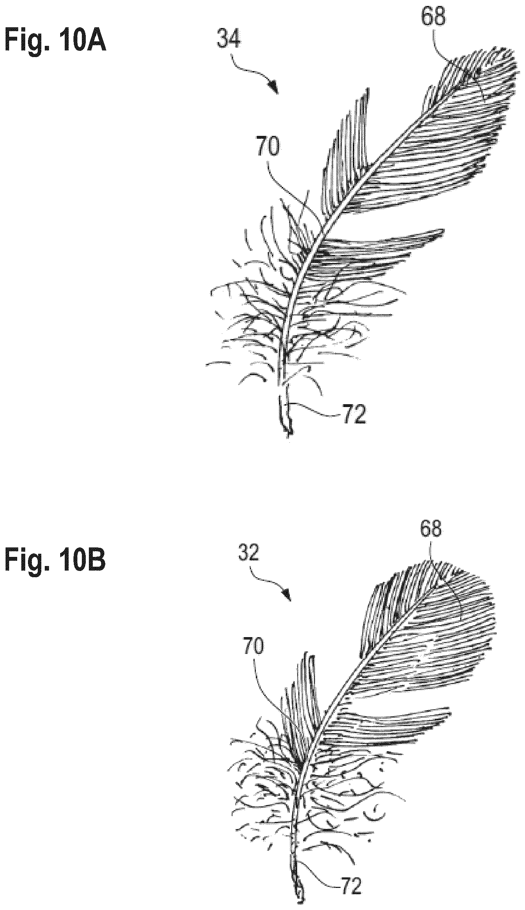

Die einzelnen Bestandteile des Füllmaterials 12 sind teilweise auch in Figuren 5 bis 10 im Detail zu sehen.

Bei den Daunen 14 kann es sich sowohl um Gänsedaunen als auch um Entendaunen handeln.

In ähnlicher Weise sind die Federn 16 in Gänsefedern 40, Entenfedern 42 und Landgeflügelfedern unterteilt. Bei den Landgeflügelfedern kann es sich beispielsweise um Hühnerfedern 44 handeln.

Um das Füllmaterial 12 klassifizieren zu können, umfasst das computergestützte System 10 einen Probenraum bzw. eine Probefläche 46, ein bildgebendes Modul, beispielsweise ein Kameramodul 48, mit zumindest einem bildgebenden Gerät, beispielsweise einer Kamera 50, sowie ein Auswertemodul 52.

Zur Analyse wird das Füllmaterial 12 also in den Probenraum bzw. auf die Probefläche 46 platziert, sodass das Füllmaterial 12 von der zumindest einen Kamera 50 des Kameramoduls 48 erfasst werden kann, also allgemein vom bildgebenden Gerät des bildgebenden Moduls. Hierbei werden Bilddaten erzeugt, die vom bildgebenden Modul bzw. dem Kameramodul 48 zur weiteren Analyse an das Auswertemodul 52 übermittelt werden, wie nachfolgend detailliert erläutert wird.

Bei der Probefläche 46 handelt es sich bevorzugt um zwei Plexiglasscheiben 53, die aufeinander angeordnet sind und zwischen denen die Probe des Füllmaterials 12 platziert wird. Dabei dient die obere Plexiglasscheibe 53 vor allem dazu, die Probe des Füllmaterials 12 zu fixieren.

Vorzugsweise ist die jeweilige Plexiglasscheibe 53 rechteckig, insbesondere quadratisch, beispielsweise mit einer Seitenlänge von 1,5 m.

Um eine möglichst gute Bildqualität und somit verlässliche Bilddaten zu erzeugen, wird die Probefläche 46 von unten von wenigstens einer Lichtquelle 55 beleuchtet.

Das Auswertemodul 52 umfasst und/oder hat Zugriff auf einen Prozessor, auf dem eine computergestützte Bilderkennung hinterlegt ist. Zusätzlich kann das Auswertemodul 52 noch weitere Programme umfassen, beispielsweise eine Gewichtserkennung.

Wie in Figur 1 zu sehen, kann das bildgebende Modul bzw. das Kameramodul 48 einen Schlitten 54 umfassen, an dem das bildgebende Gerät bzw. die Kamera 50 befestigt ist, wobei der Schlitten 54 entlang einer Schiene 56 verfahrbar ist. Der Schlitten 54 kann also angetrieben sein, sodass das bildgebende Gerät bzw. die Kamera 50 über den Schlitten 54 entlang der Schiene 56 verfahren wird. Dadurch wird sichergestellt, dass mittels des bildgebenden Moduls, insbesondere des Kameramoduls 48, die gesamte Probe des Füllmaterials 12 erfasst werden kann. Dies ist insbesondere dann von Bedeutung, wenn mittels des bildgebenden Moduls, insbesondere des Kameramoduls 48, mehrere Daunen und/oder Federn gleichzeitig analysiert werden sollen, also die zu analysierende Probe eine Mischung ist, und nicht jeder Bestandteil der Mischung einzeln analysiert wird, was zeitaufwendiger wäre.

Die Kamera 50 des Kameramoduls 48, welche vorzugsweise eine Graustufenkamera ist, wird schrittweise entlang der Schiene 56 verfahren und nach jedem Schritt eine (grauskalierte) Aufnahme von dem entsprechenden Abschnitt der Probefläche 46 mit der Probe des Füllmaterials 12 aufnimmt.

Vorzugsweise umfasst das Kameramodul 48 zusätzlich eine zweite Kamera 57, die Makroaufnahmen der Probe des Füllmaterials 12 machen kann, insbesondere von bestimmten Bereichen oder Elementen. Dies ist beispielsweise dann der Fall, wenn auf den Aufnahmen der Kamera 50 eine Daune 14 oder eine Feder 16 identifiziert wurde, die genauer analysiert werden soll, um die Geflügelart zu bestimmen.

Grundsätzlich kann das bildgebende Modul auch als ein Mikroskop-Modul ausgebildet sein.

Insofern kann als bildgebendes Gerät ein Mikroskop vorgesehen sein, das die Probe erfasst. Das Mikroskop kann, wie vorstehend erläutert, ebenfalls verfahrbar angeordnet sein, insbesondere über den Schlitten 54 entlang der Schiene 56.

Das Mikroskop-Modul kann ferner zwei Mikroskope umfassen.

Nachfolgend wird auf die konkrete Ausgestaltung des bildgebenden Moduls als Kameramodul 48 weiter eingegangen, wobei das Kameramodul 48 in analoger Wiese durch ein entsprechendes Mikroskop-Modul ersetzt werden kann, sodass die nachfolgenden Ausführungen auch für das Mikroskop-Modul bzw. das Mikroskop gelten.

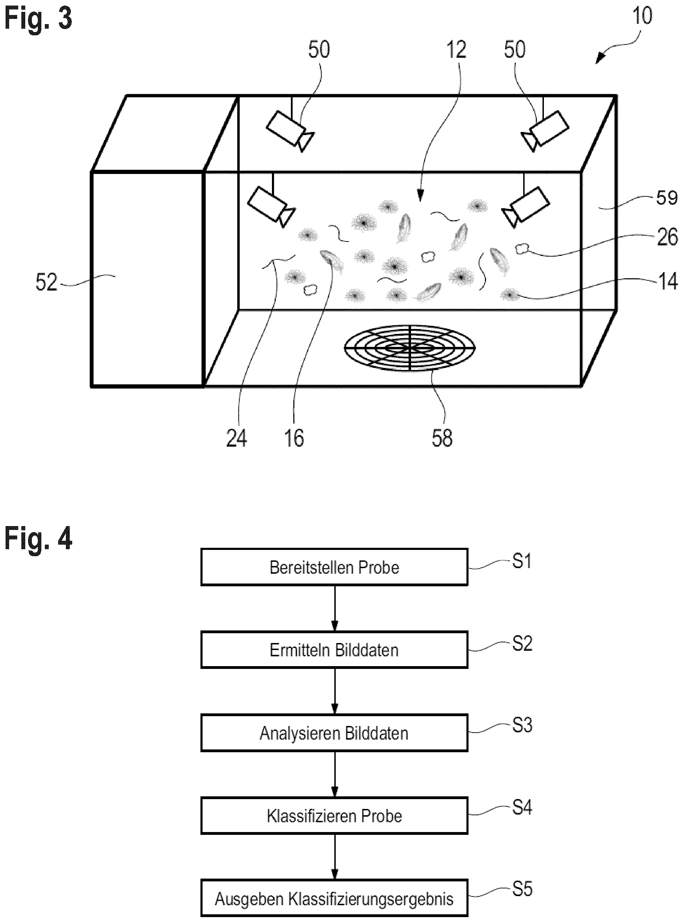

Alternativ, wie in Figur 1 oder 3 zu sehen ist, kann das computergestützte System 10 anstatt einer Probefläche 46 auch einen Proberaum 59 aufweisen in den das Füllmaterial 12 zur Analyse platziert wird.

Auch hier kann das Kameramodul 48 über den Schlitten 54 entlang der Schiene 56 verfahrbar sein, sodass die Kamera 50 des Kameramoduls 48 durch mehrere (grauskalierte) Bildaufnahmen die gesamte Probe des Füllmaterials 12 erfassen kann.

In Figur 3 ist eine alternative Ausführungsform des computergestützten Systems 10 gezeigt, bei dem das Kameramodul 48 mehrere Kameras 50 umfasst, die fest an Wandungen des Probenraums 59 des computergestützten Systems 10 montiert sind. Vorteilhafterweise sind die Kameras 50 dabei so eingestellt, dass sie unterschiedliche Bereiche des Probenraums 59 erfassen, um eine möglichst vollständige Aufnahme des Füllmaterials 12 zu erhalten. Für eine anpassbare Ausrichtung kann das Kameramodul 48 schwenkbare Befestigungsmittel umfassen, sodass die Winkelausrichtung der Kameras 50 anpassbar ist.

Zusätzlich weist das hier gezeigte computergestützte System 10 eine (optionale) Verwirbelungs- und/oder Vermischungseinheit 58 auf, welche dazu eingerichtet ist, das zu klassifizierende Füllmaterial 12 aufzuwirbeln bzw. zu vermischen. Hierdurch wird sichergestellt, dass sich keine Haufen von Bestandteilen des Füllmaterials 12 bilden, bei denen schwerere und/oder kleinere Bestandteile von den leichten und größeren Bestandteilen verdeckt sind. Die Verwirbelungs- und/oder Vermischungseinheit 58 kann so angesteuert werden, dass eine homogene Verteilung des Füllmaterials 12 im Probenraum 59 erreicht wird, wie es in Figur 3 gezeigt ist. Mittels der mehreren Kameras 50 kann dann eine dreidimensionale Aufnahme der Bestandteile des Füllmaterials 12 erzeugt werden, wodurch entsprechende Bilddaten generiert werden, die an das Auswertemodul 52 übermittelt werden, insbesondere die computergestützte Bilderkennung.

Das von dem computergestützten System 10 verwendete Verfahren zum Analysieren von Füllmaterial 12 ist schematisch in Figuren 4 und 5 gezeigt, worauf nachfolgend Bezug genommen wird.

In einem ersten Schritt S1 wird eine Probe von Füllmaterial 12 bereitgestellt, die zumindest eine Daune 14 und/oder eine Feder 16 von Land- oder Wassergeflügel umfasst. Wird ein computergestütztes System 10 gemäß der Ausführungsform in Figur 1 oder 2 verwendet, so sollte das Füllmaterial 12 entlang der gesamten Länge ausgebreitet werden, sodass es zu möglichst wenigen bis gar keinen Überlagerungen der einzelnen Bestandteile des Füllmaterials 12 der Probe kommt.

Die Probe von Füllmaterial 12 kann eine Teilmenge eines Füllmaterials 12 sein, welches als Rohware oder vorbehandelte Ware für die Weiterverarbeitung geliefert wurde oder in einem Produkt bereits verwendet und recycelt worden ist. Mit anderen Worten kann die Probe von Füllmaterial 12 eine Stichprobe sein, welche analysiert werden soll.

Als nächstes wird in Schritt S2 die Probe des Füllmaterials 12 mittels des Kameramoduls 48 erfasst, insbesondere der wenigstens einen Kamera 50 des Kameramoduls 48, wozu das Kameramodul 48 über den Schlitten 54 entlang der Schiene 56 verfahren wird. Dementsprechend werden während des Verfahrens gemäß Schritt S2A mit zumindest eine Kamera 50 des Kameramoduls 48 mehrere Bilder aufnimmt, um Bilddaten der Probe zu erhalten. Die von der Kamera 50 aufgenommenen Bilder sind dabei vorzugsweise Graustufenbilder.

Nachdem die Kamera 50 ein Bild der Probe des Füllmaterials 12 aufgenommen hat, werden zunächst die Bilddaten an das Auswertemodul 52 des computergestützten Systems 10 übermittelt, bevor die Kamera 50 mit dem Schlitten 54 entlang der Schiene 56 in die nächste Position gefahren wird und das nächste Bild aufnimmt.

Die mehreren Bilder der verschiedenen Positionen der Kamera 50 werden von der Auswerteeinheit 52 zu einem einzigen Bild der Probe zusammengeführt, also einem Gesamtbild, wie dies in Schritt S2B dargestellt ist. Die Auswertung der Bilddaten mittels der Auswerteeinheit 52 erfolgt an dem zusammengeführten Bild der Probe, also dem Gesamtbild.

Alternativ kann die zumindest eine Kamera 50 des Kameramoduls 48 auch nur ein Bild aufnehmen, sodass die Bilddaten nur das eine Bild umfassen. Letztendlich hängt dies vor allem von der Probengröße ab, also der Menge an Daunen 14 und/oder Federn 16.

Entspricht das computergestützte System 10 der in Figur 3 gezeigten Ausführungsform, so muss das Füllmaterial 12 nicht über die gesamte, dafür vorgesehene Länge des computergestützten Systems 10 verteilt werden.

Stattdessen kann das Füllmaterial 12 in den Probenraum 46 geschüttet werden. Zum Erfassen mittels des Kameramoduls 48, wird die Verwirbelungs- und/oder Vermischungseinheit 58 eingeschaltet, sodass das zu klassifizierende Füllmaterial 12 aufgewirbelt bzw. vermischt wird und sich die einzelnen Bestandteile bzw. Komponenten des Füllmaterials 12 vermischen. Dadurch wird sichergestellt, dass einzelne Bestandteile nicht komplett bedeckt sind.

Dabei kann bei der Bilderfassung ein einziges Bild von einer einzelnen Kamera 50 des Kameramoduls 48 zum Ermitteln der Bilddaten erzeugt werden oder je ein Bild von mehreren Kameras 50. Alternativ dazu ist es auch möglich, dass zumindest eine der Kameras 50 des Kameramoduls 48 mehrere Aufnahmen tätigt, anhand derer die Bilddaten erzeugt werden. Auch können mehrere oder gar alle Kameras 50 des Kameramoduls 48 mehrere Bilder aufnehmen, basierend auf denen die Bilddaten erzeugt werden.

Es ist auch denkbar, ein computergestütztes System 10 zu verwenden, welches sowohl ein verfahrbares Kameramodul 48 als auch eine Verwirbelungs- und/oder Vermischungseinheit 58 aufweist.

Grundsätzlich kann die jeweilige Kamera 50 eine Videokamera sein, die ein Video aufnimmt, also eine Abfolge von Einzelbildern. Das Video bzw. die Abfolge der Einzelbilder wird dann vom Auswertemodul 52 analysiert. Hierzu kann das Video zunächst in seine Einzelbilder zerlegt werden, die dann alle analysiert werden oder nur eine Teilmenge der Einzelbilder, bspw. jedes zehnte Einzelbild des Videos.

Unabhängig von der konkreten Ausführungsform des computergestützten Systems 10 werden Bilddaten erzeugt, die zur weiteren Analyse verwendet werden.

Diese Bilddaten werden anschließend in einem weiteren Schritt S3 an das Auswertemodul 52 übermittelt und von dem Auswertemodul 52 mittels der computergestützten Bilderkennung des computergestützten Systems 10 analysiert.

Die computergestützte Bilderkennung basiert beispielsweise auf einer künstlichen Intelligenz in der Form eines Neural Networks, insbesondere eines Convolutional Neural Networks. Selbstverständlich können auch andere bekannten Bilderkennungsverfahren für die computergestützte Bilderkennung verwendet werden.

Bei der Analyse wird das Gesamtbild von der Auswerteeinheit 52 wieder in kleinere Abschnitte unterteilt bzw. segmentiert, insbesondere basierend auf möglichen Elementen, die von der Auswerteeinheit 52 erkannt werden, was in Schritt S3A in Figur 5 gezeigt ist. Diese möglichen Elemente entsprechen dabei zumindest teilweise späteren Klassifizierungsergebnissen der Probe des Füllmaterials 12, nämlich Federn, Federfasern, Daunen, Daunenfasern und Rest.

Basierend auf der Analyse der computergestützten Bilderkennung wird die Probe in einem vierten Schritt S4 automatisch klassifiziert und anschließend in einem Schritt S5 ein Klassifizierungsergebnis für die Probe ausgegeben. Dabei kann das Klassifizierungsergebnis eine quantitative Zusammensetzung der Probe umfassen, also eine prozentuale Angabe der jeweiligen Bestandteile bzw. Komponenten an der gesamten Probe des Füllmaterials 12, die analysiert wurde. Dies kann auch als Zusammensetzung der Probe des Füllmaterials 12 bezeichnet werden.

Insbesondere werden, wie in Figur 5 in Schritt S4A zu sehen ist, zunächst die Anteile an Daunen 14, Federn 16, gebrochenen Federn, Daunenflug 22, Federnflug, synthetischem Füllmaterial 24 und/oder Baumwolle 26 bestimmt. Vorzugsweise bestimmt die Auswerteeinheit 52 dabei die prozentualen Anteile der Zusammensetzung der Probe des Füllmaterials 12. Dabei können insbesondere das synthetische Füllmaterial 24 und die Baumwolle 26 unter andere Elemente bzw. Rest zusammengefasst werden. Es ist aber auch möglich, dass das synthetische Füllmaterial 24 und die Baumwolle 26 einzeln erfasst werden, sofern dies gewünscht ist.

Das Klassifizierungsergebnis kann ebenso eine klassifizierte Geflügelart umfassen. Folglich kann das computergestützte System 10 nicht nur die Anteile an Daunen 14, Federn 16 und anderen Elementen, bspw. gebrochenen Federn, Daunenflug 22, Federnflug, synthetischem Füllmaterial 24 und/oder Baumwolle 26, bestimmen, sondern auch von welcher Geflügelart die Daunen 14 und Federn 16 stammen.

Als Klassifizierungsergebnis kann also bspw. ausgegeben werden, dass die Probe von Füllmaterial 12, welche analysiert worden ist, 95,5 % Gänsedaune, 4,3 % Gänsefeder und 0,2 % weitere Elemente enthält.

Die weiteren Elemente können, sofern gewünscht, noch weiter klassifiziert werden, bspw. als gebrochene Federn, Daunenflug 22, Federnflug und synthetisches Füllmaterial 24 sowie Baumwolle 26. Insofern kann als Klassifizierungsergebnis bspw. ausgegeben werden, dass die 0,2 % weitere Elemente zu 85 % Daunenflug 22, 10 % Federnflug, 4 % gebrochene Federn und 1 % Baumwolle 26 umfasst.

Dafür wird in Schritt S4B eine Makroaufnahme von der zweiten Kamera 57 getätigt, wenn die Auswerteeinheit in Schritt S4A zumindest eine Daune 14 und/oder eine Feder 16 erkennt.

Dafür wird der zweiten Kamera 57 von der Auswerteeinheit 52 die Position bzw. die Positionen der detektierten Daunen 14 und/oder Federn 16 übermittelt, sodass die Makroaufnahmen eine Detailansicht der erkannten Daunen 14 und/oder Federn 16 zeigen. Alternativ wird die zweite Kamera 57 stets mit der Kamera 40 mitverfahren, sodass die zweite Kamera 57 direkt vor Ort ist.

In Schritt S4C werden dazu Knoten 78 der Daunen 14 analysiert, welche charakteristisch für die jeweilige Geflügelart sind. Die Knoten 78 von Gänsenebenästen 62, Entennebenästen 64 und Hühnernebenästen 66 unterscheiden sich in ihrer Form sowie ihrem Abstand, weswegen diese anhand der Bilder unterschieden werden können, insbesondere anhand der Makroaufnahmen. Die genauen Unterschiede werden nachfolgend noch genauer erklärt. Dies gilt ebenfalls für Federn 76, die hinsichtlich ihrer Knoten und/oder Nebenäste in analoger Weise analysiert werden können.

Werden von der Auswerteeinheit 52 weder Daunen 14 noch Federn 16 detektiert, werden keine Makroaufnahmen von bestimmten Elementen bzw. Bereichen der Probe des Füllmaterials 12 aufgenommen, sodass Schritte S4B und S4C übersprungen werden.

In Schritt S4D wird jedem Pixel des Gesamtbilds von der Auswerteeinheit eine Gewichtung $W_{ij}$ zugewiesen, die sich nach der Intensität bzw. Dunkelheit $D_{ij}$ des Pixels und dem detektierten Element $F_{ij}$ des Pixels richtet.

Die Gesamtgewichtung, die in Schritt S4E bestimmt wird, ergibt sich durch die Formel

$$W_{total} = \sum_{i=1}^{M} \sum_{j=1}^{N} D_{ij} \times F_{ij}$$

und gibt Auskunft, über die Qualität der Probe des Füllmaterials 12 und kann in Schritt S5 zusätzlich oder alternativ zu dem Klassifizierungsergebnis ausgegeben werden.

Vorzugsweise wird das Verfahren zum Analysieren von der Probe des Füllmaterials 12 für eine Probe mehrmals, insbesondere viermal, durchgeführt, sodass das in Schritt S5 ausgegebene Klassifizierungsergebnis der Durchschnitt von mehreren Analysen ist.

Um eine solche Klassifizierung zuverlässig zu gewährleisten, wird das in Figur 6 skizzierte Verfahren zum Trainieren eines computergestützten Systems 10 zum Klassifizieren von Füllmaterial 12 verwendet.

In einem ersten Trainingsschritt S10 wird zunächst eine Probe bereitgestellt, die eine Daune 14 und/oder eine Feder 16 von Land- oder Wassergeflügel umfasst.

Zu Beginn des Trainingsverfahrens kann als Probe eine oder mehrere Daunen 14 desselben Typs oder eine oder mehrere Federn 16 desselben Typs bereitgestellt werden. Im weiteren Verlauf des Trainingsverfahrens können Daunen 14 unterschiedlichen Typs, also Gänsedaunen und Entendaunen, oder Federn 16 unterschiedlichen Typs als Probe bereitgestellt werden, also Gänsefedern, Entenfedern und Hühnerfedern. Abschließend können beim Trainingsverfahren dann Mischungen als Probe bereitgestellt werden, die sowohl Daunen 14, Federn 16 sowie weitere Komponenten bzw. Bestandteile umfassen, also andere Elemente, was letztendlich dem späteren Anwendungsfall entspricht.

Wie bereits bei dem Verfahren zum Klassifizieren des Füllmaterials 12 erläutert, wird die Probe, sofern es eine Mischung ist, bevorzugt über die gesamte Probenfläche des computergestützten Systems 10 verteilt, sodass es zu möglichst wenigen Überlappungen der Bestandteile der Probe bzw. Mischung kommt.

Auch hier wird in einem nächsten Trainingsschritt S11 durch die zumindest eine Kamera 50 des Kameramoduls 48 zumindest eine, bevorzugt mehrere Bildaufnahmen der Probe erfasst. Über diese Aufnahmen werden die zu analysierenden Bilddaten erhalten.

Sofern beim Trainingsverfahren ein computergestütztes System 10 gemäß der Ausführungsform nach Figur 1 oder Figur 2 verwendet wird, kann die Kamera 50 des Kameramoduls 48 über den Schlitten 54 und die Schiene 56 verfahren werden, sofern eine Mischung als Probe für das Training verwendet wird.

Sofern beim Trainingsverfahren ein computergestütztes System 10 gemäß der Ausführungsform nach Figur 3 verwendet wird, kann die Probe bzw. Mischung mittels der Verwirbelungs- und/oder Vermischungseinheit 58 verwirbelt bzw. vermischt werden.

Unabhängig von dem verwendeten computergestützten System 10 können so Bilddaten selbst erzeugt werden, die für das Training verwendet werden, wie nachfolgend erläutert wird.

Es kann zusätzlich ein Trainingsdatensatz bereitgestellt werden, der ein Auswerteergebnis enthält, sofern die Bilddaten selbst basierend auf einer realen Probe von Füllmaterial 12 erzeugt wird, also realen Daunen 14 und/oder Federn 16.

Alternativ kann für das gesamte Trainingsverfahren ein Trainingsdatensatz bereitgestellt werden, der Bilddaten von zumindest einer Probe sowie ein zu erwartendes Auswerteergebnis für die entsprechende Probe enthält. Mit anderen Worten wird das computergestützte System 10 in diesem Trainingsverfahren ausschließlich mit Daten gespeist.

Auch kann das Trainingsverfahren einen gemischten Dateneingang enthalten, also Bilddaten erzeugen basierend auf einer erfassten Probe und Bilddaten nutzen, die als Datensatz zur Verfügung gestellt werden.

In jedem Fall liegen Bilddaten vor, die von der computergestützten Bilderkennung zu analysieren sind, nämlich entweder selbst erzeugte Bilddaten oder im Trainingsdatensatz enthaltene Bilddaten.

Beim Analysieren der Bilddaten durch die computergestützte Bilderkennung des computergestützten Systems 10 (siehe Trainingsschritt S12) wird die Probe automatisch klassifiziert und ein Klassifizierungsergebnis für die Probe ausgegeben.

Da die Probe eine Mischung mehrerer unterschiedlicher Arten von Daunen 14 und/oder Federn 16 umfassen kann, soll auch eine klassifizierte Geflügelart als Teil des Klassifizierungsergebnisses ausgegeben werden. Bei den zu klassifizierenden Geflügelarten handelt es sich insbesondere um Gänse, Enten und Hühner. Dabei ist sowohl für Daunen 14 als auch für Federn 16 eine Klassifizierung möglich, sodass Gänse- und Entendaunen sowie Gänse-, Enten- und Hühnerfedern identifiziert werden können.

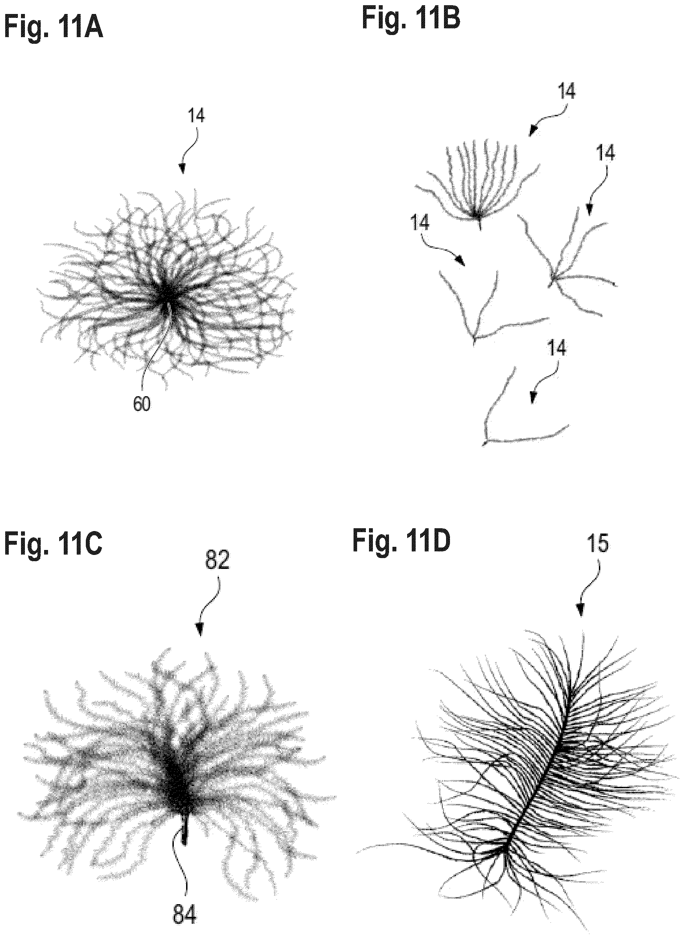

Zunächst wird zwischen einer Daune 14 und einer Feder 16 unterschieden. Daunen 14 werden oftmals auch als Flaumfedern 15 bezeichnet und bilden die Unterdecke des Gefieders von Wassergeflügel; siehe Figur 11D.

Eine Daune 14 besteht aus Büscheln von leichten, flauschigen Filamenten, die aus einem schwach angedeuteten Daunenkern 60 wachsen; siehe Figur 11A. Bei den Filamenten handelt es sich beispielsweise um Daunenäste und/oder Flaumfederäste. Es ist nur von einer Daune 14 die Rede, wenn mindestens zwei Daunen- oder Flaumfederäste in einem Punkt miteinander verbunden sind. Dadurch sehen Daunen 14 auf Bildern einer Schneeflocke ähnlich.

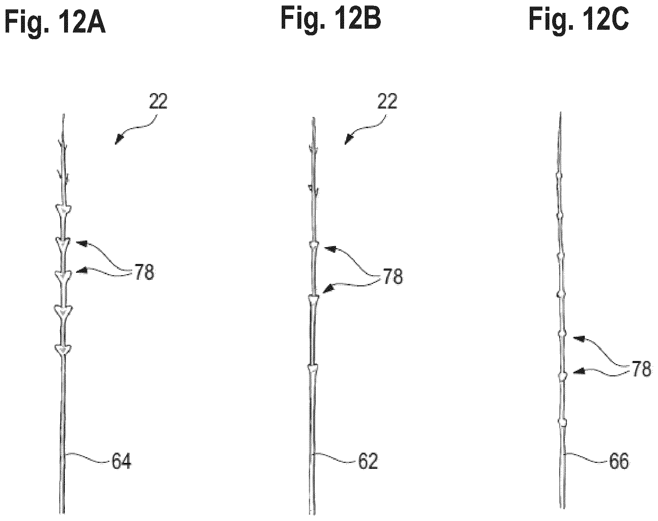

Die Daunen- und/oder Flaumfederäste entsprechen Gänsenebenästen 62 sowie Entennebenästen 64. Hühner weisen Federäste 66 auf, insbesondere ausschließlich, jedoch sind diese Teil des normalen Gefieders und nicht Teil einer Daune 14. Die entsprechenden Unterschiede gehen aus den Figuren 12A bis 12C hervor, in denen die Knotenabstände bei einem einzelnen Filament dargestellt sind, worauf nachfolgend noch eingegangen wird.

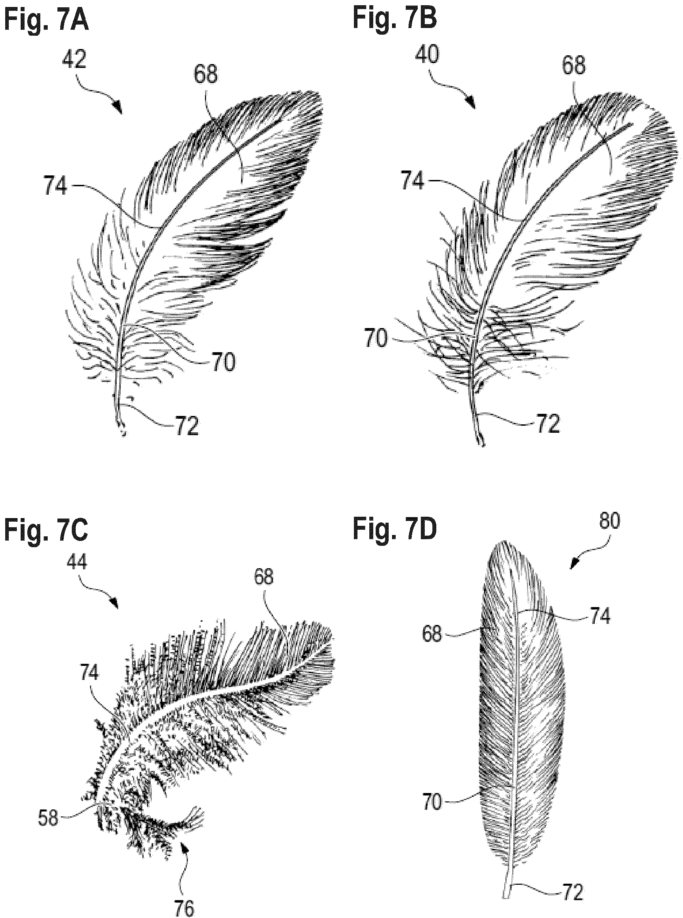

Federn 16 hingegen stammen von der hornigen Hülle des Geflügels und weisen dabei eine kurze und weiche Fahne 68 auf. Im Gegensatz zu Daunen 14 haben Federn 16 einen gut entwickelten Kiel 70, welcher aus einer Spule 72 und einem Schaft 74 besteht. Dies geht aus den Figuren 7A bis 7D deutlich hervor.

Vor allem Hühnerfedern 44 sind leicht zu identifizieren, da sie oftmals eine Beifeder 76 aufweisen, die von derselben Spule 72 der normalen Feder 16 abzweigt und kleiner als diese ist; siehe Figur 7C. Federn 16 von Wassergeflügel dagegen sehen sich ähnlicher, jedoch ist auch hier eine Unterscheidung möglich. Während Gänsefedern 40 wie abgeschnitten aussehen, laufen Entenfedern 42 spitz zu. Insofern unterscheiden sich die Federn 16 von Wassergeflügel an ihrer jeweiligen Spitze, wie aus einem Vergleich der Figuren 7A und 7B hervorgeht. Die verschiedenen Federn 16 sind jeweils in Figuren 7A, 7B und 7C gezeigt.

Idealerweise sollte das Füllmaterial 12, insbesondere bei hochwertigen Bettwaren, keinen Langfedern 80 enthalten. Wie in Figur 7D zu sehen ist, weisen Langfedern 80 eine längere und steifere Fahne 68 als eine Feder 16 auf und stammen aus dem steifen, groben Flügel- und Schwanzgefieder. Zudem ist der Kiel 70 der Langfedern 80 geradlinig, insbesondere geradliniger als die der für hochwertige Bettwaren vorgesehenen Federn 40, 42, welche in den Figuren 7A und 7B gezeigt sind.

Anhand dieser Merkmale kann also bei Federn 16 zwischen den einzelnen Geflügelarten und dem Federtyp unterschieden werden.

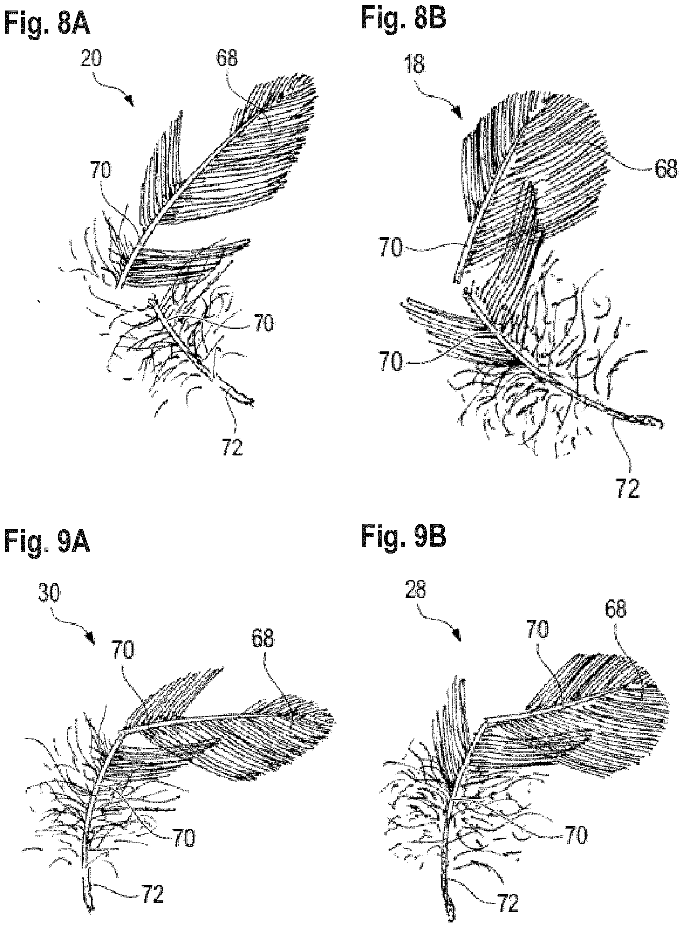

In den Figuren 8 bis 10 sind jeweils gebrochene, geknickte und beschädigte Gänse- und Entenfedern 18, 20; 28, 30; 32, 34 zu sehen, die zu den anderen Elementen gehören. Bei einer gebrochenen Feder ist der Kiel 70 gebrochen und es fehlen mehr als 40% des Kiels oder es handelt sich um einen Kiel 70 ohne Fahne 68. Bei einer geknickten Feder dagegen ist der Kiel 70 noch nicht vollständig durchtrennt. Eine beschädigte Feder weist einen intakten Kiel 70 und somit ihre ursprüngliche Form auf, jedoch weist die Fahne 68 Schädigungen auf oder es fehlen Äste oder Teile der Fahne.

Auch dies sind eindeutige Merkmale, welche mithilfe des computergestützten Systems 10, insbesondere der computergestützten Bilderkennung, bei der Analyse der Bilddaten festgestellt werden können.

Bei Daunen 14 wird dagegen zunächst lediglich zwischen Gänsedaunen und Entendaunen unterschieden. Hühner, welche zum Landgeflügel gehören, haben keine Daunen 14.

Der Unterschied zwischen Gänse- und Entendaunen ist an den Filamenten, insbesondere an den Nebenästen, erkennbar, wie vorstehend bereits beschrieben. Dabei liegt der Unterschied insbesondere im Abstand der Knoten 78; siehe Figuren 12A bis 12C. Während die Knoten 78 bei Gänsenebenästen 62 einen relativ großen Abstand aufweisen, sind die Knoten 78 bei Entennebenästen 64 vergleichsweise gering. Auch unterscheiden sich die einzelnen Nebenäste in der Form ihrer Knoten 78 sowie deren Größe, wie in den Figuren 12A und 12B zu sehen ist.

Der Vollständigkeitshalber ist auch ein Hühnernebenast 66 in Figur 12C gezeigt, der im Vergleich zu den leicht keilförmigen Gänse- und Entennebenästen 62, 64 eher runde Knoten 78 aufweist. Zudem ist der Abstand der Knoten 78 bei einem Hühnernebenast 66 charakteristisch.

In einem nächsten Trainingsschritt S13 wird überprüft, ob das Klassifizierungsergebnis der analysierten Bilddaten mit der wenigstens einen bereitgestellten Probe übereinstimmt. Es wird also überprüft, ob die computergestützte Bilderkennung die Probe richtig analysiert hat.

Dazu kann der computergestützten Bilderkennung in einer vordefinierten Reihenfolge eine bekannte Probe vorgegeben werden, sodass das Auswertemodul 52 ein Auswerteergebnis für jede Probe erhält, welches mit dem Klassifizierungsergebnis verglichen wird. Wie vorstehend erläutert, kann das Auswerteergebnis Teil des Trainingsdatensatzes sein.

Sofern das Trainingsverfahren gerade erst begonnen hat, kann dem computergestützten System 10, insbesondere der computergestützten Bilderkennung, ausschließlich Proben eines Typs vorgelegt werden, wie bereits erläutert. Insofern können zunächst mehrere Hundert oder mehrere Tausend Entendaunen, insbesondere deren Bilddaten, analysiert werden, bei denen das Auswerteergebnis jeweils das gleiche ist. Dies kann in analoger Weise mit Gänsedaunen, Entenfedern, Gänsefedern und Hühnerfedern erfolgen. Anschließend können unterschiedliche Daunentypen und/oder Federtypen vermischt werden, wobei dann unterschiedliche Auswerteergebnisse berücksichtigt werden müssen. Im späteren Verlauf des Trainingsverfahrens kann dem computergestützten System 10, insbesondere der computergestützten Bilderkennung, dann eine Mischung als Probe bzw. mehrere unterschiedliche Mischungen als Proben vorgelegt werden, die zu analysieren sind.

Weicht das Klassifizierungsergebnis, welches die computergestützte Bilderkennung aufgrund seiner Analyse ausgibt, von der bereitgestellten Probe bzw. dem zugeordneten Auswerteergebnis ab, so passt das Auswertemodul 52 die computergestützte Bilderkennung an, wie in Trainingsschritt S14 dargestellt.

Dabei werden insbesondere die Gewichtungsfaktoren der künstlichen Intelligenz angepasst, also die Gewichtungen zwischen einzelnen Schichten der künstlichen Intelligenz. Dies wird so oft wiederholt, bis das von der computergestützten Bilderkennung ausgegebene Klassifizierungsergebnis der bereitgestellten Probe bzw. dem zugeordneten Auswerteergebnis entspricht.

Bevorzugt wird die Auswertemodul 52, wie vorstehend bereits erläutert, zunächst mit einem Trainingsdatensatz vertraut gemacht, sodass eine Grundlage geschaffen wird, auf deren Basis das eigentliche Training stattfindet. Dabei ist es sinnvoll, zunächst einen Datensatz aufzubauen, welcher ausschließlich Aufnahmen von genau zuordenbaren Daunen 14 besitzt. Anschließend kann der Trainingsdatensatz um Bilddaten von Federn 16 von Wasser- und Landgeflügel erweitert werden, bevor zusätzliche Bilddaten für Füllmaterial, welches weder von einem Landgeflügel, noch von einem Wassergeflügel stammt, bereitgestellt werden. Alternativ kann natürlich auch zunächst ein Datensatz, der Bilddaten von Federn 16 von Wasser- und Landgeflügel aufweist, und anschließend ein Datensatz genutzt werden, der Aufnahmen von genau zuordenbaren Daunen 14 umfasst. Die Reihenfolge der Datensätze ist also egal, solange diese Bilddaten von ein und demselben Typ umfassen.

Das Training des computergestützten Systems 10 kann dabei auch umfassen, dass das trainierte computergestützte System 10 weitere Analysefähigkeiten neben der reinen Unterscheidung zwischen Daune 14 und Feder 16 sowie der zugehörigen Geflügelart hat.

Basierend auf dem Klassifizierungsergebnis kann zudem eine Qualitätsklasse bestimmt werden, die mit der vom Hersteller bzw. Zulieferer angegebenen Qualitätsklasse verglichen werden kann. Somit kann kontrolliert werden, ob die Angaben stimmen und ob der Preis für den Verbraucher fair ist. Hierzu wird, wie vorstehend schon erläutert, die Zusammensetzung der Probe des Füllmaterials 12 bestimmt.

Idealerweise können auch unreife Daunen 82, wie beispielsweise in Figur 11C gezeigt ist, klassifiziert werden. Unreife Daunen 82 weisen anstatt des Daunenkerns 60 eine Federschneide 84 auf, von der aus sich die Nebenäste erstrecken. In anderen Worten sind unreife Daunen 82 noch nicht vollständig entwickelt.

**Patentansprüche**

1. Verfahren zum Trainieren eines computergestützten Systems (10) zum Analysieren von Füllmaterial (12), mit den folgenden Schritten

    - Bereitstellen wenigstens einer Probe, die eine Daune (14) und/oder eine Feder (16) von Land- oder Wassergeflügel umfasst, und Erfassen der Probe mittels eines bildgebenden Geräts, um Bilddaten der Probe zu erhalten, und/oder Bereitstellen von Bilddaten wenigstens einer Probe, die eine Daune (14) und/oder eine Feder (16) von Land- oder Wassergeflügel umfasst;
    - Analysieren der Bilddaten mittels einer computergestützten Bilderkennung des computergestützten Systems (10), wobei die Probe automatisch klassifiziert wird und ein Klassifizierungsergebnis für die Probe ausgegeben wird,
- Überprüfen, ob das Klassifizierungsergebnis der analysierten Bilddaten mit der wenigstens einen bereitgestellten Probe übereinstimmt, und
- Anpassen der computergestützten Bilderkennung, sofern das Klassifizierungsergebnis von der bereitgestellten Probe abweicht.

2. Verfahren nach Anspruch 1, **dadurch gekennzeichnet, dass** die Probe eine Mischung mehrerer unterschiedlicher Arten von Daunen (14) und/oder Federn (16) umfasst, wobei eine quantitative Zusammensetzung der Probe ausgegeben wird.

3. Verfahren nach Anspruch 1 oder 2, **dadurch gekennzeichnet, dass** ein Anteil von Füllmaterial (12) in der Probe ausgegeben wird, der weder von einem Landgeflügel noch von einem Wassergeflügel stammt, insbesondere einen Anteil von synthetischem Füllmaterial (24) und/oder Baumwolle (26).

4. Verfahren nach einem der vorhergehenden Ansprüche, **dadurch gekennzeichnet, dass** eine Zusammensetzung der Probe ausgegeben wird, wobei die Zusammensetzung von dem Anteil an Daunen (14), dem Anteil an Federn (16), dem Anteil an gebrochenen Federn, dem Anteil an Daunenflug (22), dem Anteil an Federnflug und/oder dem Anteil an Füllmaterial abhängt, welches weder von einem Landgeflügel noch von einem Wassergeflügel stammt.

5. Verfahren nach einem der vorhergehenden Ansprüche, **dadurch gekennzeichnet, dass** bei der Analyse der Bilddaten mittels einer computergestützten Bilderkennung eine klassifizierte Geflügelart als Teil des Klassifizierungsergebnisses ausgegeben wird.

6. Verfahren nach einem der vorhergehenden Ansprüche, **dadurch gekennzeichnet, dass** das Überprüfen des Klassifizierungsergebnisses automatisiert erfolgt, indem der computergestützten Bilderkennung eine vordefinierte Reihenfolge an bekannten Proben vorgegeben wird, sodass die computergestützte Bilderkennung ein Auswerteergebnis für jede Probe erhält, und wobei die computergestützte Bilderkennung selbsttätig das jeweilige Klassifizierungsergebnis mit dem zugeordneten Auswerteergebnis abgleicht.

7. Verfahren nach einem der vorhergehenden Ansprüche, **dadurch gekennzeichnet, dass** eine auf künstlicher Intelligenz basierte Bilderkennung verwendet wird, um die Bilddaten zu analysieren.

8. Verfahren nach einem der vorhergehenden Ansprüche, **dadurch gekennzeichnet, dass** Gewichtungsfaktoren der computergestützten Bilderkennung angepasst werden, sofern das Klassifizierungsergebnis von der bereitgestellten Probe abweicht.

9. Verfahren zum Analysieren von Füllmaterial (12) mittels eines computergestützten Systems (10), mit den folgenden Schritten

- Bereitstellen wenigstens einer Probe, die eine Daune (14) und/oder eine Feder (16) von Land- oder Wassergeflügel umfasst,
- Erfassen der Probe mittels eines bildgebenden Geräts, um Bilddaten der Probe zu erhalten,
- Analysieren der Bilddaten mittels einer computergestützten Bilderkennung des computergestützten Systems (10),
- Automatischen Klassifizieren der Probe, und
- Ausgeben eines Klassifizierungsergebnisses für die Probe.

10. Verfahren nach Anspruch 9, **dadurch gekennzeichnet, dass** das bildgebende Gerät eine Vielzahl an Bildern, insbesondere Graustufenbildern, aufnimmt, wobei die computergestützte Bilderkennung aus den Bilddaten der Vielzahl von Bildern, insbesondere Graustufenbildern, ein Gesamtbild erzeugt.

11. Verfahren nach Anspruch 9 oder 10, **dadurch gekennzeichnet, dass** ein weiteres bildgebendes Gerät eine Makroaufnahme aufnimmt, wenn eine Daune (14) oder eine Feder (16) erkannt wird.

12. Verfahren nach einem der Ansprüche 9 bis 11, **dadurch gekennzeichnet, dass** eine klassifizierte Geflügelart und/oder eine quantitative Zusammensetzung der Probe ausgegeben wird, insbesondere wobei ein Anteil von Füllmaterial (12) in der Probe ausgegeben wird, der weder von einem Landgeflügel noch von einem Wassergeflügel stammt, beispielsweise einen Anteil von synthetischem Füllmaterial (24) und/oder Baumwolle (26).

13. Verfahren nach einem der Ansprüche 9 bis 12, **dadurch gekennzeichnet, dass** das computergestützte System (10) mit einem Verfahren nach einem der Ansprüche 1 bis 8 trainiert worden ist.

14. Computergestütztes System (10) zum Analysieren von Füllmaterial (12), wobei das computergestützte System (10) ein bildgebendes Modul (48) und ein Auswertemodul (52) umfasst, und wobei das computergestützte System (10) eingerichtet ist, das Verfahren nach einem der vorhergehenden Ansprüche auszuführen.

15. Computergestütztes System (10) nach Anspruch 14, **dadurch gekennzeichnet, dass** das bildgebende Modul (48) ein erstes bildgebendes Gerät, das eingerichtet ist, Bilder, insbesondere Graustufenbilder, des zu analysierenden Füllmaterials (12) aufzunehmen, und ein zweites bildgebendes Gerät umfasst, das eingerichtet ist, Makroaufnahmen des Füllmaterials (12) aufzunehmen.

## Fig. 1

## Fig. 2

**Fig. 3**

**Fig. 4**

| Bereitstellen Probe | S1 |
| Ermitteln Bilddaten | S2 |
| Analysieren Bilddaten | S3 |
| Klassifizieren Probe | S4 |
| Ausgeben Klassifizierungsergebnis | S5 |

**Fig. 5**

```
┌──────────────────────────────┐
│        Aufnehmen Bild        │────  S2A
└──────────────────────────────┘
┌──────────────────────────────┐
│      Erstellen Gesamtbild     │────  S2B
└──────────────────────────────┘
┌──────────────────────────────┐
│     Aufteilen nach Elementen  │────  S3A
└──────────────────────────────┘
┌──────────────────────────────┐
│     Bestimmen der Elemente    │────  S4A
└──────────────────────────────┘
┌──────────────────────────────┐
│      Federn oder Daunen?      │
└──────────────────────────────┘
┌──────────────────────────────┐
│    Erstellen Makroaufnahme    │────  S4B
└──────────────────────────────┘
┌──────────────────────────────┐
│    Klassifizieren Elemente    │────  S4C
└──────────────────────────────┘
┌──────────────────────────────┐
│      Zuordnen Gewichtung      │────  S4D
└──────────────────────────────┘
┌──────────────────────────────┐
│   Ermitteln Zusammensetzung   │────  S4E
└──────────────────────────────┘
```

**Fig. 6**

```
┌──────────────────────────────┐
│      Bereitstellen Probe      │────  S10
└──────────────────────────────┘
┌──────────────────────────────┐
│      Ermitteln Bilddaten      │────  S11
└──────────────────────────────┘
┌──────────────────────────────┐
│  Analysieren & Klassifizieren Probe │────  S12
└──────────────────────────────┘
┌──────────────────────────────┐
│ Überprüfen Klassifizierungsergebnis │────  S13
└──────────────────────────────┘
┌──────────────────────────────┐
│     Anpassen Bilderkennung    │────  S14
└──────────────────────────────┘
```

# Fig. 7A

# Fig. 7B

# Fig. 7C

# Fig. 7D

**Fig. 8A**

20  68

70

70

72

**Fig. 8B**

18

68

70

70

72

**Fig. 9A**

30  70  68

70

72

**Fig. 9B**

28  70  68

70

72

**Fig. 10A**

**Fig. 10B**

**Fig. 11A**

**Fig. 11B**

**Fig. 11C**

**Fig. 11D**

Fig. 12A

Fig. 12B

Fig. 12C

Europäisches Patentamt

European Patent Office

Office européen des brevets

# EUROPÄISCHER RECHERCHENBERICHT

**Nummer der Anmeldung**

EP 24 19 0106

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | XIAOFEI YAN ET AL: "A Feather and Down Category Recognition System Based on GA and SVM", EDUCATION TECHNOLOGY AND COMPUTER, 2009 INTERNATIONAL CONFERENCE ON, IEEE, PISCATAWAY, NJ, USA, 17. April 2009 (2009-04-17), Seiten 128-132, XP031493558, ISBN: 978-0-7695-3609-5 * Zusammenfassung * * Abschnitte "I. Introduction", "III. Introduction of SVM", "V. Feather and down Recognition with SVM", "V.A. Training of SVM" * | 1-15 | INV. G06T7/00 |
| X | CN 115 753 271 A (GUANGZHOU GUANGJIAN TECH DEVELOPMENT CO LTD ET AL.) 7. März 2023 (2023-03-07) * Seite 2, Zeilen 1-11 * * Seite 3, Zeile 20 - Seite 4, Zeile 18 * | 1-15 | |
| | ----- | | RECHERCHIERTE SACHGEBIETE (IPC) G06T |

Der vorliegende Recherchenbericht wurde für alle Patentansprüche erstellt

| Recherchenort | Abschlußdatum der Recherche | Prüfer |
|---|---|---|
| München | 21. November 2024 | Eckert, Lars |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 19 0106

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-11-2024

| Im Recherchenbericht angeführtes Patentdokument | Datum der Veröffentlichung | Mitglied(er) der Patentfamilie | Datum der Veröffentlichung |
|---|---|---|---|
| CN 115753271 A | 07-03-2023 | KEINE | |

Für nähere Einzelheiten zu diesem Anhang : siehe Amtsblatt des Europäischen Patentamts, Nr.12/82

EPO FORM P0461